## Europäisches Patentamt

## European Patent Office

## Office européen des brevets

(11) Veröffentlichungsnummer: **0 111 576**
**A1**

## EUROPÄISCHE PATENTANMELDUNG

(21) Anmeldenummer: 82111683.7

(22) Anmeldetag: 16.12.82

(51) Int. Cl.³: **F 23 L 13/02**
**F 16 K 1/16**

(43) Veröffentlichungstag der Anmeldung:
27.06.84 Patentblatt 84/26

(84) Benannte Vertragsstaaten:
AT BE CH DE FR GB IT LI LU NL SE

(71) Anmelder: RAS Rohrleitungs-, Apparate- und
Stahlbaugesellschaft mbH & Co. KG
Bergstrasse 8
D-4370 Marl(DE)

(72) Erfinder: Midleja, Gerhard, Dipl.-Ing.
An der Gräfte 8
D-4660 Gelsenkirchen Buer(DE)

(72) Erfinder: Friedenstab, Werner
Westerholterstrasse 620
D-4352 Herten(DE)

(74) Vertreter: Herrmann-Trentepohl, Werner,
Dipl.-Ing. et al,
Schaeferstrasse 18
D-4690 Herne 1(DE)

(54) Heissgas-, insbesondere Rauchgasabsperrklappe.

(57) Absperrklappe (2), vorzugsweise Doppelabsperrklappe (50, 51) mit mindestens Schwenkklappe (64 bis 67), die eine auf mehreren Armen (79, 80; 88, 89) einer Klappenwelle (58, 59) befestigte Klappenplatte (77, 78, 94) aufweist, auf deren Rändern (76) eine an einem Klappenrahmen (3 bis 7) feste Dichtung (74, 98) abdichtet.

Die Schwenkklappen= platte (77, 78) ist in zwei in parallelen Ebenen angeordnete Schwenkflügel (68, 69) und der Klappenrahmen (3 bis 7) mit einer Traverse (70, 105) unterteilt, die in je einen Abschnitt (71, 72) eines Halters einer jedem Flügel (68, 69) zugeordneten umlaufenden Dichtung (74, 98) aufweist und die Klappenwelle (58, 59) überdeckt, deren Arme (79, 80, 88, 89) auf die Flügel (68, 69) aufgeteilt sind. Die einem Flügel (69) zugeordneten Arme (79) sind gestreckt und die Arme (80) für den zweiten Flügel (68) abgekröpft.

FIG.3

4890 Herne 1,
naeferstraße 18
Postfach 1140
Pat.-Anw. Herrmann-Trentepohl
Fernsprecher: 0 23 23 / 5 10 13
5 10 14
Telegrammanschrift:
Bahrpatente Herne
Telex 08 229 853

Dipl.-Ing. R. H. Bahr (1931-1981)
Dipl. - Phys. Eduard Betzler
Dipl.-Ing. W. Herrmann-Trentepohl
PATENTANWÄLTE
PROFESSIONAL REPRESENTATIVES
BEFORE THE EUROPEAN PATENT OFFICE

8000 München 70
0111576
Postfach 70 02 09
Pat.-Anw. Betzler
Fernsprechor: 089 / 7 25 40 83
7 25 40 84
7 25 40 85
Telegrammanschrift:
Babotzpat München
Telex 5 215 380
Telefax 089/79 89 88

Bankkonten:
Bayerische Vereinsbank München 952 287
BLZ 700 202 70
Dresdner Bank AG Herne 7-520 499
BLZ 432 800 84
Postscheckkonto Dortmund 558 68-467
BLZ 440 100 46

Ref.: A 31 173 X/Wd.
In der Antwort bitte angeben

Zuschrift bitte nach:

Abholfach

15. Dezember 1982

RAS Rohrleitungs-, Apparate- und Stahlbaugesellschaft,
Bergstr. 8, 4370 Marl

"Heißgas-, insbesondere Rauchgasabsperrklappe"

Die Erfindung betrifft eine Heißgas-, insbesondere Rauchgasabsperrklappe, vorzugsweise eine Doppelabsperrklappe mit mindestens einer Schwenkklappe, die eine auf mehreren Armen einer Klappenwelle befestigte Klappenplatte aufweist, auf deren Rändern eine an einem Klappenrahmen feste Dichtung abdichtet.

Solche vorzugsweise aus mehreren Drehklappen bestehende Absperrorgane sind für große Querschnitte vorgesehen, in denen beträchtliche Gasmengen strömen. Für die von ihnen abgesperren Querschnitte weisen sie daher meistens mehrere Drehklappen auf parallelen Wellen auf, welche über ein außerhalb des Klappenrahmens und damit außerhalb des Strömungsquerschnittes angeordnetes Getriebe gemeinsam betätigt werden. Solche Ab-

- 2 -

sperrklappen sind auch als Drosselklappen in Zwischenstellungen ihrer Drehklappen verwendbar, die bei geöffneten Querschnitten mit ihren Platten parallel zur Strömungsrichtung angeordnet sind und in geschlossenem Zustand von Gasen angeströmt werden.

Doppelabsperrklappen werden hauptsächlich in Rauchgaskanäle eingebaut, um einen gasdichten Verschluß des Kanals zu gewährleisten. Hierbei sind die Drehklappen in zwei parallelen Ebenen im Klappenrahmen angeordnet, die einen Zwischenraum definieren, der durch von außen eingeblasener Sperrluft derart unter Überdruck gesetzt wird, daß die Rauchgase von den mit den Klappen abgesperrten Querschnitten abgedrängt werden. Vorzugsweise werden solche Doppelabsperrklappen vor Rauchgasreinigungsanlagen, insbesondere vor Rauchgasentschwefelungsanlagen eingebaut. Die letztgenannten Rauchgasreinigungsanlagen, die beispielsweise auf der Absorption von Schwefeldioxyd durch Kalk unter Bildung von Gips beruhen, erzeugen u.a. Brüden, welche aufgrund ihrer chemischen Zusammensetzung außerordentlich aggressiv auf die ihnen ausgesetzten Werkstoffe, insbesondere auf Metall einwirken und bei abgesperrtem Rauchgaskanal auf die Drehklappen auftreffen.

Die Erfindung geht von einer vorbekannten Absperrklappe der beschriebenen Art aus (DE-AS 14 25 694). Hierbei durchsetzt die Klappenwelle die Längsmitte der Klappenplatte, auf deren einer Seite die Arme befestigt, d.h. in der Regel verschweißt sind. Die Dichtung besteht aus einem verformbaren hohlzylindrischen Stahlmantel, welcher einen hitzebeständigen, nachgiebigen Kern umschließt. Diese Dichtung ist in einseitig offenen Haltern untergebracht, die jeweils bis zur Klappenwelle reichen, an der die Dichtung unterbrochen ist. Solche Dichtungen haben den Vorteil, daß sie unter dem Schließdruck der Drehklappe verformt werden und dadurch einerseits ausreichend große Dichtflächen ausbilden und andererseits durch ihre Walkbeanspruchung Schmutzablagerungen, Ansätze und Korrosionen beseitigen bzw. ausgleichen können. Nachteilig wirken sich jedoch die in der Klappenwelle auftretenden Dichtungsschwierigkeiten aus.

Es ist bekannt, zur Beseitigung solcher im Bereich der Schwenkwelle auftretenden Abdichtungsschwierigkeiten an der Rahmeninnenseite eine in sich geschlossene, aus einem Blechstreifen bestehende Metalldichtung anzubringen, welche auf den Kanten der Klappenplatte abdichtet und sich über nachgiebige Verbindungselemente im Klappenrahmen abstützt (DE-OS 23 32 311). Abgesehen davon, daß man die Durchführung der Klappenwelle damit nicht abdichten kann, beschränken sich solche Dichtungen wegen ihres relativ komplizierten Aufbaus und ihrer im allgemeinen geringen Dichtflächen auch auf Sonderfälle.

Gemeinsam sind den bekannten Absperrklappen jedoch eine Reihe von Eigenschaften, die abgesehen von den Abdichtungsschwierigkeiten insbesondere wegen der aggressiven Eigenschaften der strömenden Gase bzw. Brüden zu weiteren Schwierigkeiten führen. Die

Klappenwellen sind auch bei geschlossenen Klappen an der Rauchgas- bzw. Brüdenseite der Einwirkung dieser Gase und Dämpfe ausgesetzt. Das gilt auch für die angeströmten Klappenplatten. Diese Teile korrodieren daher bevorzugt. Die damit verbundenen Schäden sind schwerwiegend und die zu ihrer Beseitigung notwendigen Reparaturen sind schwierig, weil die Arme meistens auf Rohren befestigt sind, welche die Klappenplatte durchsetzen und die Klappenwellen umschließen, so daß sperrige Teile ausgewechselt werden müssen. Es ist schwierig, die Drehklappen insbesondere bei einsetzenden Korrosionen im Klappenrahmen und gegenüber den Dichtungen auszurichten. Häufig müssen daher in der Praxis die Absperrorgane einschließlich ihrer Rahmen, Antriebe und ihrer etwaiger **Sperrluft** ausgebaut und erneuert werden. Das ist bei Großkesselanlagen z.B. bei Kraftwerken meistens mit erheblichen betrieblichen Einschränkungen verbunden.

Der Erfindung liegt die Aufgabe zugrunde, bei einer Absperrklappe der eingangs als bekannt vorausgesetzten Art einen reparaturfreundlichen Aufbau zu schaffen, der darüberhinaus eine **volle** Dichtigkeit bei geschlossenen Drehklappen gewährleistet.

Diese Aufgabe wird erfindungsgemäß dadurch gelöst, daß die Schwenkklappenplatte in zwei in parallelen Ebenen angeordnete Schwenkflügel und der Klappenrahmen mit einer Traverse unterteilt ist, die je einen Abschnitt eines Halters einer jedem Flügel zugeordneten umlaufenden Dichtung aufweist und die Klappenwelle überdeckt, deren Arme auf die Flügel aufgeteilt sind, wobei die einem Flügel zugeordneten Arme gestreckt und die Arme für den zweiten Flügel abgekröpft sind.

Erfindungsgemäß wird durch die Aufteilung jeder Schwenkklappe auf zwei in zum Klappenrahmen parallele Ebene angeordnete Schwenkflügel mit eigenem, durch die Rahmentraverse geschlossenen Rahmen und dementsprechend umlaufenden Dichtungsorgan, das auf den Flügelrändern abdichtet, eine Abdichtung der hinter der Traverse angeordneten Klappenwelle überflüssig, die mit ihren geraden Armen den vorher angeordneten Flügel und den noch weiter nach vorn versetzten Flügel mit den gekröpften Armen hält und bewegt. Diese Ausbildung hat den Vorteil, daß die Welle im Strömungsschatten der Traverse liegt und daher in geöffnetem Zustand bzw. in gedrosselter Stellung der Drehklappe der unmittelbaren Einwirkung der Gase und Brüden entzogen ist bzw. in der geschlossenen Stellung der Drehklappe für die Gase und Brüden nicht erreichbar ist. Andererseits kann das jeweilige Dichtungssystem, insbesondere wenn es sich um auf den Klappenrändern wie eingans als bekannt vorausgesetzt abdichtende Dichtungen handelt, eine ununterbrochene und hinreichend große Dichtfläche auf dem betreffenden Flügelrand entwickeln, welche zur vollen Dichtigkeit des Absperrorgans bei geschlossenen Drehklappen führt.

Vorzugsweise und gemäß einer bevorzugten Ausführungsform der Erfindung sind die Flügel mit den Schwenkarmen verschraubt. Diese lösbare Befestigung der
Flügel auf den Wellenarmen hat den Vorteil, daß
die Flügel ohne die Notwendigkeit des Ausbaus
der Wellen und des Absperrklappenrahmens für sich
montiert und demontiert werden können. Da die
Klappenwelle und folglich auch die Wellenarme in
Strömungsrichtung jeweils hinter den Flügeln liegen, liegen diese Teile auch im Strömungsschatten
der Flügel und sind der Einwirkung der Gase und
Dämpfe ebenso wie die Klappenwelle entzogen. Die
Anströmseite der Flügel kann deswegen auch glattflächig sein. Das ermöglicht die Verwirklichung
der Klappenplatten mit Blechen, die als Verschleißteile relativ wirtschaftlich und leicht ersetzbar sind und sich
gegen Beeinträchtigungen durch Beschichtungen oder Nachbeschichtungen
schützen lassen.

Ferner hat diese Befestigungsart der Flügel den
Vorteil, daß von Fall zu Fall durch Beilagen die
Klappenbleche auf den Wellenarmen eingestellt und
dadurch u.a. gegenüber den Rahmen und den rahmenfesten Dichtungen ausgerichtet werden können. Vorzugsweise sind daher zwischen den Schwenkarmen
und den Flügeln Platten angeordnet und mit den Verschraubungen verspannt, welche die Beilagen bilden.
Diese Ausführungsart der Erfindung erleichtert
ihrerseits die Wartungs- und Reparaturarbeiten,
weil sie ohne Veränderungen an der Klappenwelle und
ihres Antriebes die Einrichtung der Flügel ermöglicht.

Die Erfindung ermöglicht bei einer weiteren Ausführungsform auch eine reparaturfreundliche Wellenanordnung.Diese wird grundsätzlich dadurch ermöglicht, daß die Klappenwelle aus mehreren Abschnitten zusammengesetzt und in einem an der Traverse befestigten teilbaren Lager abgestützt ist. Durch Öffnung des Lagers und nach Lösen der die Abschnitte verbindenden Verriegelungen kann die Klappenwelle in ihre Abschnitte aufgeteilt und leicht demontiert werden. Auf umgekehrtem Wege kann die Klappenwelle aus ihren Abschnitten zusammengesetzt werden.

Die Einzelheiten, weiteren Merkmale und andere Vorteile der Erfindung ergeben sich aus der nachfolgenden Beschreibung einer Ausführungsform anhand der Figuren in der Zeichnung; es zeigen

Fig. 1  in Stirnansicht unter strichpunktierter Wiedergabe des Querschnitts eines Rauchkanals eine Doppelklappe gemäß der Erfindung,

Fig. 2  eine Seitenansicht des Gegenstandes der Fig. 1,

Fig. 3  einen Schnitt längs der Linie III-III der Fig. 1 und

Fig. 4  einen Schnitt längs der Linie IV-IV der Fig. 3.

In einen bei 1 mit seinem Außenprofil angedeuteten Rauchgaskanal ist eine Doppelabsperrklappe eingebaut, die allgemein mit 2 bezeichnet ist. Die beweg-

- 8 -

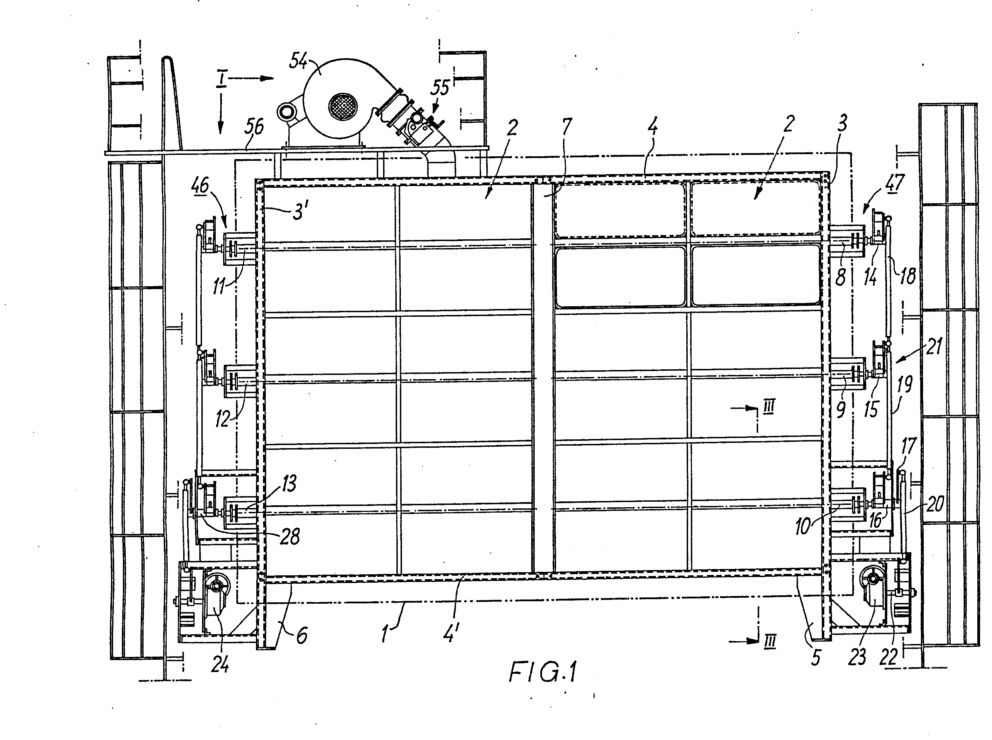

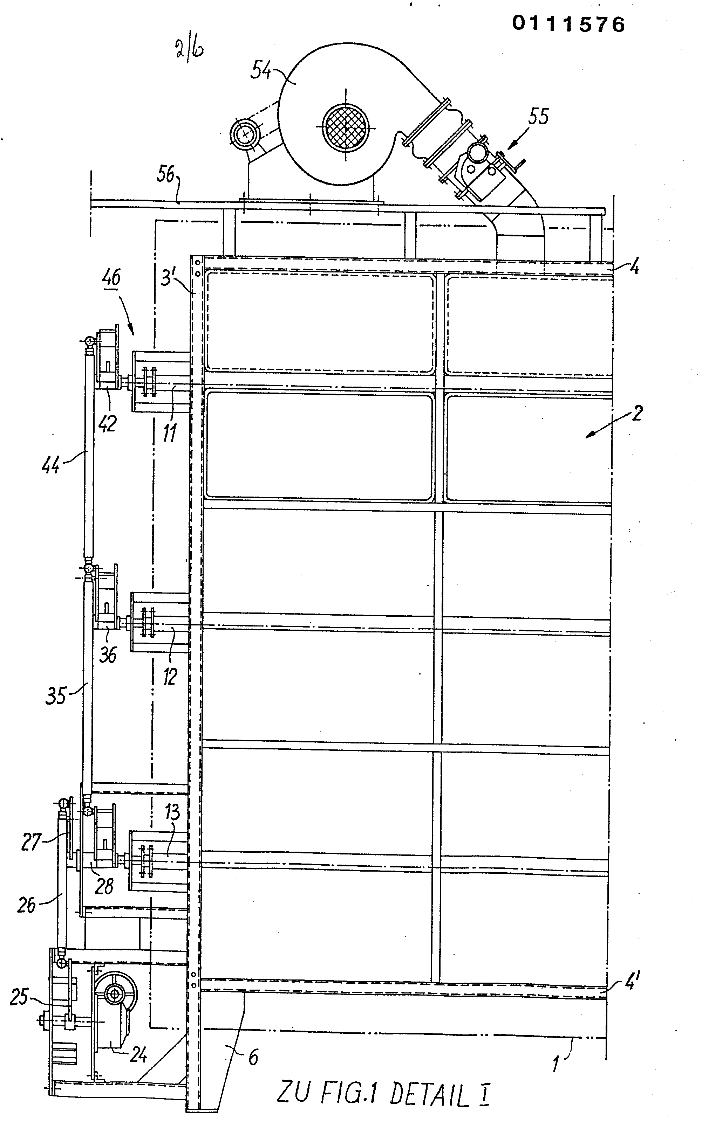

lichen Teile der Doppelabsperrklappe 2 sitzen in einem stationären Stahlrahmen mit senkrechten Rahmenstielen 3, 3' einer oberen Rahmentraverse 4 und einer unteren Rahmentraverse 4', die auf Ständern 5 bzw. 6 in der Kanalsohle abgestützt ist. Zwischen den Stielen 3, 3' ist der Rahmen mit einem Mittelstiel 7 unterteilt. Die senkrechten Rahmenglieder 3, 3' und 7 tragen außen Stopfbuchsen 8 bis 10, die auf aus dem Rahmen herausgeführten Enden von Drehklappenwellen abdichten und am Rahmenstiel 3' mit 11 bis 13 bezeichnet sind. Die Wellenenden tragen Naben 14 bis 16 mit Schwingen, wie bei 17 dargestellt. Sie dienen zum Anschluß von Koppelstangen 18 bis 20 des an einer Seite angeordneten Hebelgetriebes 21, dessen Antriebswelle 22 die Abtriebswelle eines Stellantriebes 23 ist. Diese Teile gehören zu der rechts des Mittelstückes der Fig. 1 angeordneten Drehklappen- und wellenanordnung.

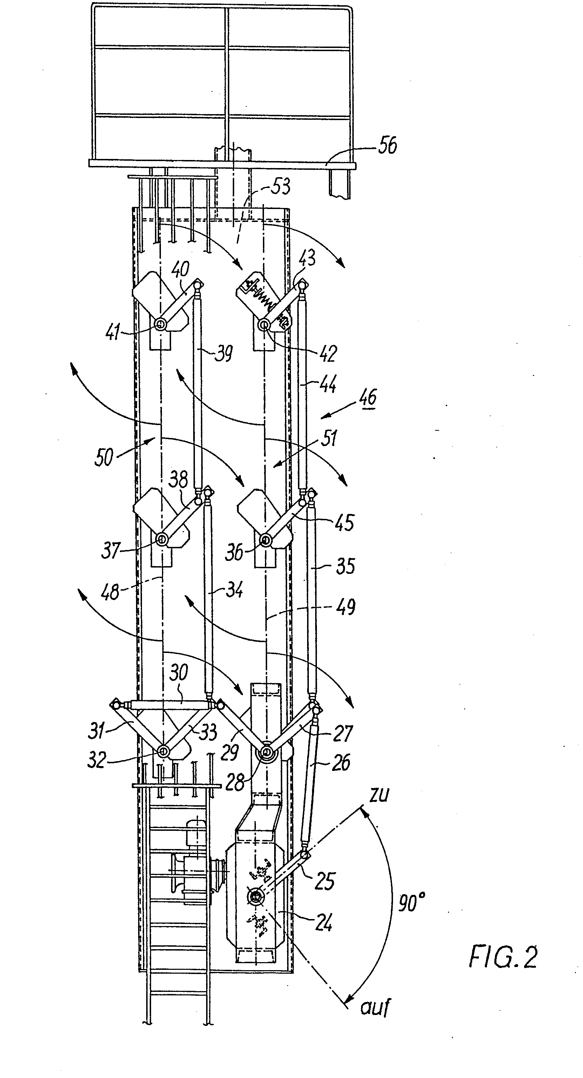

An dem Rahmenstiel 3' ist eine entsprechende Anordnung vorgesehen, die genauer aus der Darstellung der Fig.2 ersichtlich ist. Der der links von dem Mittelstück angebrachten Drehklappen- und -wellenanordnung zugeordnete Stellantrieb 24 wirkt auf eine Schwinge 25, die über eine Koppelstange 26 mit einer Schwinge 27 verbunden ist, welche auf einer Welle 28 befestigt ist. Diese ist ihrerseits mit dem Wellenstumpf 13 verbunden. Auf der gleichen Welle sitzt eine der Schwinge 27 entsprechende weitere Schwinge 29, die über eine Koppelstange 30 mit einer Schwinge 31 verbunden ist, welche auf einem zu dem Wellenstumpf 13 parallelen Wellenstumpf 32 festgelegt is t. Der Schwinge 31 entspricht eine Schwinge 33, die mit dem Wellenstumpf 32 gedreht wird und dabei auch auf eine Koppelstange 34 wirkt, die der Koppelstange 35 entspricht, mit der die Kraft des Schwenkantriebes 24 von der Nabe 28 auf eine Nabe 36 übertragen wird, die auf dem mit der Anordnung 12 abgedichteten Wellenende sitzt.

Der Welle 36 entspricht die Welle 37, welche eine Schwinge 38 bewegt, die über eine Koppelstange 39 mit einer Schwinge 40 verbunden ist, welche auf einer Welle 41 sitzt. Der Welle 41 entspricht die Welle 42, die mit der Nabe 11 gekuppelt ist und auf der eine der Schwinge 40 entsprechende Schwinge 43 befestigt ist, welche über die zur Koppelstange 39 parallele Koppelstange 44 mit einer der Schwinge 38 entsprechenden Schwinge 45 gekuppelt ist.

Dem vorstehend beschriebenen und allgemein mit 46 bezeichneten Getriebe entspricht dem an dem anderen Rahmenstiel 3 angebrachten und allgemein mit 47 bezeichneten Getriebe, das nicht vollständig wiedergegeben ist. Demnach sind in zwei hintereinander angeordneten parallelen Ebenen 48, 49 jeweils zwei neben einem Rahmenstiel 7 angeordnete Absperrorgane mit mehreren Drehklappen vorgesehen, wobei die Drehklappenwellen der hintereinander angeordneten Absperrorgane jeweils über ein Getriebe gemeinsam angetrieben werden. Die den Ebenen 48 und 49 angeordneten Klappen bilden daher eine Doppelklappe und sind allgemein mit 50 und 51 bezeichnet. Da sie in ihrem weiteren Aufbau identisch sind, genügt es, die Einzelheiten anhand einer bzw. mehrerer die Doppelklappe bildender Drehklappen zu erläutern.

Zunächst ist allerdings im Zusammenhang mit der Fig. 1 darauf hinzuweisen, daß der von den vier Absperrklappen 50, 51 eingeschlossene Zwischenraum 53 bei geschlossenen Drehklappen mit einem Gebläse 54 unter Überdruck gesetzt werden kann, das mit einer Sperrluftklappe 55 versehen ist, um die Rückstromung von Rauchgasen und Brüden bei geöffneten Drehklappen zu verhindern. Das Gebläse 54 befindet sich auf einer Bühne 56, die oberhalb des Klappenrahmens angeordnet ist.

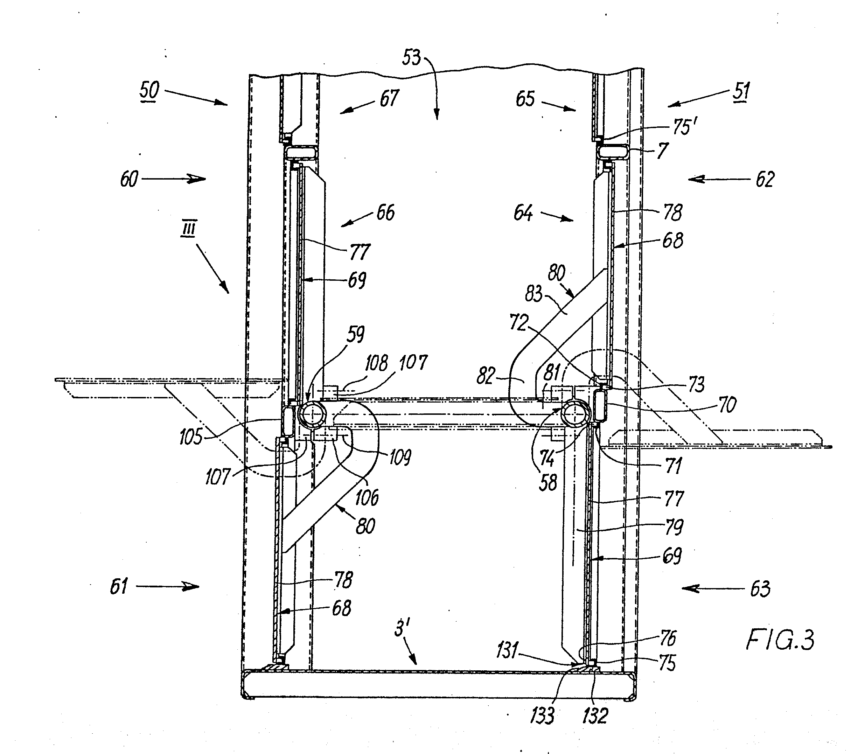

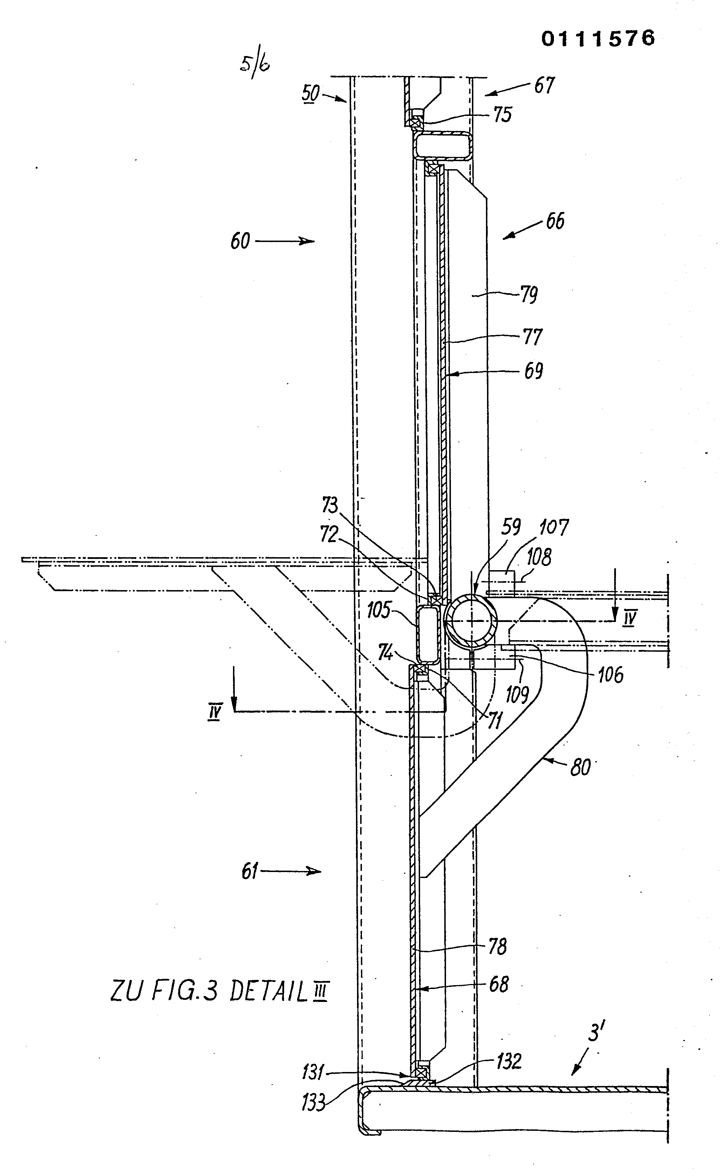

Gemäß der Darstellung der Fig. 1 gehören die Wellenabdichtungen 10 und 13 zu je einer Klappenwelle 58, 59, die über die Naben 28 und 32 mit dem Getriebe 46 betätigt werden. Die Einzelheiten ergeben sich aus der Fig. 3

Die Strömungsrichtung der Rauchgase bei geöffneten Klappen - diese Klappenstellung ist in der Darstellung der Fig. 3 strichpunktiert wiedergegeben - kennzeichnen die Pfeile 62 und 63. Diese geben auch die Seite der Doppelabsperrklappe wieder, an der die Rauchgase bei geschlossenen Drehklappen anstehen. An der gegenüberliegenden Seite geben die Pfeile 60 und 61 die Anströmrichtung von aggressiven Brüden wieder, die beispielsweise aus einer an dieser Seite des mit seiner horizontalen Rahmentraverse 3' gezeichneten Klappenrahmens angeordneten Rauchgasentschwefelungsanlage stammen. Die die Doppelklappe bildenden Absperrklappen 50 und 51 weisen die beiden Drehklappen 64, 66 auf, denen jeweils eine Klappenwelle 58, 59 zugeordnet ist. Die in der Fig. 3 abgebrochen gezeichneten Drehklappen 65, 67 der Absperrklappen 50, 51 sind mit den Drehklappen 64, 66 identisch. Lediglich an der weiter unten beschriebenen Dichtungsanordnung 75, 76 besteht ein Unterschied. Im Klappenrahmen und auf der unteren Rahmentraverse 3' ist für den dieser zugeordneten Flügelrand 131 eine Schwelle 132 vorgesehen, auf der der Dichtungshalterabschnitt 75 befestigt ist und die eine Abschrägung 133 aufweist, die nach unten verläuft, sodaß Partikel von der Dichtung 75 durch die Strömung weggeweht werden.

Jede Drehklappe ist in zwei Flügel 68, 69 aufgeteilt. Der Klappenrahmen ist seinerseits für jede Drehklappe mit einer Rahmentraverse 70 unterteilt. Diese Traverse besteht gemäß dem dargestellten Ausführungsbeispiel aus einem Hohlprofil, auf dessen Schmalseite der im Schnitt wiedergegebene Abschnitt 71 bzw. 72 eines auf der Traverse 70 angeordneten Halters für eine mit 73 und 74 dargestellte, den Klappenflügeln 68, 69 zugeordnete Dichtungsanordnung befestigt ist. Diese Abschnitte sind Winkelprofile, weil sich die im Querschnitt viereckigen und aus Vollmaterial bestehenden eigentlichen Dichtungen 73, 74 auch auf den Wangen des Hohlprofiles der Traverse 70 abstützen. Demgegenüber sind die an den senkrechten Rahmenstielen 3, 3' angeordneten Halter 75, 75' einseitig offene U-Profile. Die umlaufenden und daher überall identischen Dichtungen dichten auf den Ränderstreifen 76 der die Flügel bildenden Bleche 77 ab, wenn die Flügel 68, 69 in Ihre geschlossene Stellung eingeschwenkt sind.

Die Bleche 77, 78 der Flügel 68, 69 liegen in parallelen Rahmenebenen und in der Anströmungsrichtung jeweils vor der zugeordneten Klappenwelle 58, 59 die ihrerseits hinter der Traverse 70 bzw. 105 und damit im Strömungsschatten angeordnet ist. Dabei das Flügelblech 77 des jeweils der Drehklappenwelle 58, 59 nächstgelegenen Flügels 69 mit geraden Armen 79 an die Klappenwelle 58 angeschlossen, während die Flügelbleche 78 der in der weiter entfernten Ebene angeordneten Flügel 68 über gekröpfte Arme 80 an die Klappwelle 58 bzw. 59 angeschlossen sind. Diese Abkröpfungen setzen sich aus einem kurzen und geraden Abschnitt 81, einem demgegenüber etwa rechtwinklig abgewinkelten, ebenfalls kurzen Abschnitt 82 und aus einem etwa im Winkel von 45° zur Rahmenebene verlaufenden längeren Abschnitt 83 zusammen. Die Länge der kurzen Abschnitte 81, 82 ist so gewählt, daß in der geöffneten Klappenstellung die Traverse 70 mit den Abkröpfungen umfaßt werden kann.

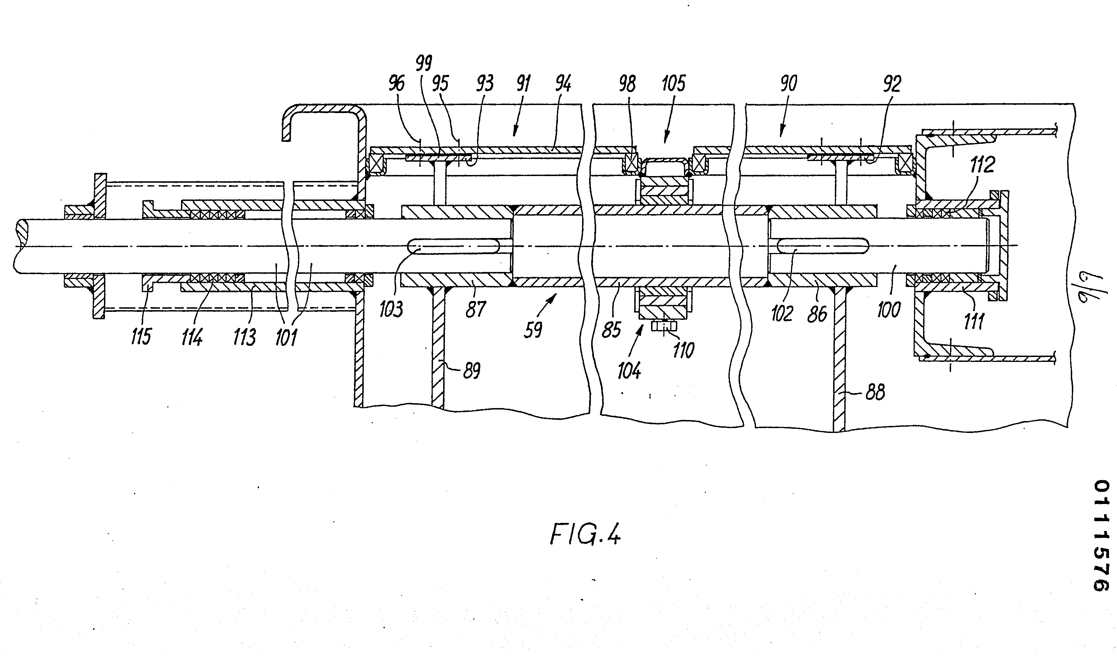

Gemäß der Darstellung der Fig. 4, welche eine abgebrochene Wiedergabe von den im Schnitt gehaltenen Teilen, insbesondere der Klappenwelle 59 darstellt, ist die jeder Drehklappe zugeordnete Klappenwelle in drei Abschnitte aufgeteilt: Der mittlere Abschnitt 85 besteht aus einem Rohr, mit an beiden Enden angeschweißten Muffen 86, 87. An die beiden Muffen sind die in Fig. 4 erkennbaren abgekröpften Arme 88, 89 angeschweißt, so daß also jedem Flügel 90, 91 einer der Arme 88, 89 zugeordnet ist. Die Befestigung der Arme 88 und 89 erfolgt über Platten 92, 93, die entsprechend den für die Platte 93 und die ihr zugeordnete Flügelplatte 94 bei 95 und 96 wiedergegebenen Mittellinien mit mehreren Schraubenbolzen an den betreffenden Flügel 91 angeschraubt sind. Um das Blech 94 gegenüber seiner umlaufenden Dichtung 98 zu justieren, befinden sich zwischen dem Blech 93 und dem Blech 94 eine oder mehrere Distanzbleche oder Scheiben 99, die mit den bei 95 und 96 angedeuteten Schrauben verspannt werden.

In den Muffen 86, 87 sitzen stangenförmige Wellenstümpfe 100, 101. Diese sind mit in die Muffen eingeschweißten Paßfedern 102, 103 angeschlossen. Außerdem sitzen die Mittelteile 85 in Lagern 104, welche an den Traversen 105 bzw. 70 (Fig. 3) befestigt sind.

Diese Gleitlager sind in zwei Hälften 106 bzw. 107, wie für die Rahmentraverse 105 in Fig. 3 dargestellt, unterteilt. Die beiden Lagerschalen lassen sich entsprechend den Schraubenachsen 108 bzw. 109 miteinander verspannen. Eine dieser Verschraubungen ist bei 110 in Fig. 4 dargestellt. Das Lösen der Verschraubung ermöglicht die Abnahme der Lagerhälfte 106 und macht den betreffenden Mittelabschnitt 85 der Schwenkwelle 59 frei. Diese kann daher leicht montiert bzw. demontiert werden.

Gemäß der Darstellung der Fig. 4 sitzen die Wellenstümpfe 100 in geschlossenen Lagern 111, in denen sie bei 112 abgestützt sind. Diese geschlossenen Lager sitzen in dem Mittelstiel 7 des Klappenrahmens und unterteilen die miteinander fluchtenden Drehklappenenden der beiden Seiten, die durch die senkrechten Rahmenstiele 3, 3' gekennzeichnet sind. Die gegenüberliegenden Wellenteile 101 sind durch die eingangs beschriebenen Stopfbuchsen mit der Dichtungsanordnung 113, 114 an ihren durch die Rahmenstiele 3, 3' herausgeführten Enden abgedichtet. Deren doppelte Lagerung ist bei 119 und 120 gezeichnet.

Im Betrieb wird durch Betätigung der Stellantriebe 23 bzw. 24 die beschriebene Drehklappenanordnung auf- bzw. zugestellt. In geöffnetem Zustand ergeben

- 14 -

sich die Schwenkrichtungen der Flügel, welche durch die Pfeile der Fig. 2 angegeben sind. Die jeweilige Auf- und Zustellung ist ebenfalls in Fig. 2 angegeben.

Bei Reparaturen lassen sich die Klappenbleche 94 durch Lösen der Verschraubungen bei 95, 96 einzeln auswechseln. Außerdem kann jede Welle durch Trennen der Paßfederverbindungen zunächst bei 103 und dann bei 102, und Öffnen des Lagers 104 leicht demontiert werden, so daß das jeweilige Mittelstück 85 frei wird. Die Distanzscheiben 99 ermöglichen die Justierung der Flügel nach entsprechenden Wartungsarbeiten auch an den umlaufenden Dichtungen 98.

Patentansprüche:

1. Heißgas-, insbesondere Rauchgasabsperrklappe, vorzugsweise Doppelabsperrklappe mit mindestens einer Schwenkklappe, die eine auf mehreren Armen einer Klappenwelle befestigte Klappenplatte aufweist, auf deren Rändern eine an einem Klappenrahmen feste Dichtung abdichtet , dadurch gekennzeichnet, daß die Schwenkklappenplatte (77, 78) in zwei in parallelen Ebenen angeordnete Schwenkflügel (68, 69) und der Klappenrahmen (3 bis 7) mit einer Traverse (70, 105) unterteilt ist, die in je einen Abschnitt (71, 72) eines Halters einer jedem Flügel (68, 69) zugeordneten umlaufenden Dichtung (74, 98) aufweist und die Klappenwelle (58, 59) überdeckt, deren Arme (79, 80, 88, 89) auf die Flügel (68, 69) aufgeteilt sind, wobei die einem Flügel (69) zugeordneten Arme (79) gestreckt und die Arme (80) für den zweiten Flügel (68) abgekröpft sind.

2. Absperrklappe nach Anspruch 1 , dadurch gekennzeichnet , daß die Flügel (68, 69) mit den Schwenkarmen (79, 80, 88, 89) verschraubt sind.

3. Absperrklappe nach einem der Ansprüche 1 oder 2, dadurch gekennzeichnet , daß zwischen den Schwenkarmen (88, 89) und den Flügeln (68, 69, 77, 78, 94) **Distanzplatten** bzw. -scheiben (99) angeordnet und mit der Verschraubung (95, 96) verspannt sind.

4. Absperrklappe nach einem der Ansprüche 1 bis 3, d a d u r c h  g e k e n n z e i c h n e t, daß die aus mehreren Abschnitten (85, 100, 101) zusammengesetzte und in einem an der Traverse (70, 105) befestigten, teilbaren Lager (104) abgestützte Klappenwelle (58, 59) nach Entfernen des aus dem Klappenrahmen (3, 3') nach außen vorstehenden Wellenendes (101) demontierbar ist.

5. Absperrklappe nach einem der Ansprüche 1 bis 4, d a d u r c h  g e k e n n z e i c h n e t, daß der mittlere Wellenmittelabschnitt (85) rohrförmig ist und die äußeren Wellenabschnitte (100, 101) in den muffenförmigen Enden (86, 87) des Mittelabschnittes (85) mit Paßfedern (102, 103) verriegelt sind.

6. Absperrklappe nach einem der Ansprüche 1 bis 5, d a d u r c h  g e k e n n z e i c h n e t, daß die abgekröpften Wellenarme (80) eine aus zwei kurzen und rechtwinklig zueinander stehenden Abschnitten (81, 82) bestehende Abkröpfung, welche bei geöffnetem Flügel (78) die Rahmentraverse (70) umgreift und einem im Winkel zur Flügelebene (78) verlaufenden längeren Abschnitt (83) bestehen.

7. Absperrklappe nach einem der Ansprüche 1 bis 6, d a d u r c h  g e k e n n z e i c h n e t, daß eine untere Rahmentraverse (4') mit einer Schwelle (131) versehen ist auf der der Dreh-

0111576

- 3 -

klappendichtung (75) zugeordnete Dichtungshalterabschnitt (76) befestigt ist, hinter dem
in Strömungsrichtung der Schwelle abgeschrägt
ist.

8. Absperrklappe nach einem der Ansprüche 1 bis 7,
d a d u r c h   g e k e n n z e i c h n e t,
daß bei zwei/parallelen Ebenen (48, 49) angeordneten Absperrorganen die Traversen (70,105)
der Drehklappen (64, 66, 65, 67) außen und die
Wellen (58, 59) innen im Zwischenraum angeordnet
sind.

FIG.1

0111576

2/6

ZU FIG.1 DETAIL I

0111576

FIG.2

FIG.3

0111576

A31413

ZU FIG.3 DETAIL Ⅲ

0111576

FIG.4

**0111576**

Nummer der Anmeldung

**EUROPÄISCHER RECHERCHENBERICHT**

Europäisches
Patentamt

EP  82 11 1683

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-B-1 264 190  (MAN) <br> * Spalte 3, Zeile 23 - Spalte 4, Zeile 15; Figuren 1-3 * | 1,3,6 | F 23 L    13/02 <br> F 16 K     1/16 |
| Y | GB-A-2 019 534  (SULZER BROTHERS LTD.) <br> * Seite  1,  Zeile 86 - Seite 2, Zeile 29; Figur 3 * | 1,7,8 | |
| A | DE-A-2 348 114  (MORLOCK) <br> * Seite 5, Zeilen 1-24; Figur 1 * | 1,8 | |
| A | US-A-3 543 439  (PANTLAND) <br> * Figur 3 * | 2 | |
| A | US-A-3 082 679  (YOUNG) <br> * Spalte 2, Zeilen 24-33, 44-49; Figur 1 * | 2,5 | |
| A | CH-A-  501 850  (VENTILATOR AG.) <br> * Spalte 2, Zeile 22 - Spalte 3, Zeile 50; Figuren 1-3 * | 5 | |
| A | US-A-2 946 554  (ASKER) <br> * Spalte 2, Zeile 53 - Spalte 3, Zeile 10; Figur 2 * | 7 | |

RECHERCHIERTE SACHGEBIETE (Int. Cl. 3)

F 23 L
F 16 K
F 24 F

Der vorliegende Recherchenbericht wurde für alle Patentansprüche erstellt.

| Recherchenort <br> DEN HAAG | Abschlußdatum der Recherche <br> 10-08-1983 | Prüfer <br> SARRE K.J.K.TH. |
|---|---|---|